# EUROPEAN PATENT APPLICATION

(11) **EP 4 262 289 A1**
(43) Date of publication of application: **18.10.2023**
(21) Application number: 21921839.3
(22) Date of filing: 29.01.2021
(51) Int. Cl.: H04W 52/02

(54) **CONFIGURATION METHOD AND APPARATUS**

(71) Applicant: Huawei Technologies Co., Ltd., Shenzhen, Guangdong 518129 (CN)
(72) Inventor: CHEN, Erkai, Shenzhen, Guangdong 518129 (CN); LIAO, Shuri, Shenzhen, Guangdong 518129 (CN); CAO, Youlong, Shenzhen, Guangdong 518129 (CN); DOU, Shengyue, Shenzhen, Guangdong 518129 (CN)
(74) Representative: Pfenning, Meinig & Partner mbB
(86) International application number: PCT/CN2021/074342
(87) International publication number: WO 2022/160233

(57) **Abstract**

This application provides a configuration method and apparatus. The method may include: receiving a first cycle from a core network element and a second cycle from a terminal, where the first cycle is an initial service cycle or a first traffic shaping service cycle, and the second cycle is a service cycle expected by the terminal; configuring a discontinuous reception DRX cycle for the terminal based on the first cycle and the second cycle; and obtaining first information, and sending sleep indication information to the terminal based on the first information. In this application, an access network device obtains cycle information of a service and the first information, to configure the DRX cycle that can match the service and the sleep indication information that can enable the terminal to enter a sleep state in time. Therefore, power consumption of the terminal is reduced while user experience is ensured.

## Description

### TECHNICAL FIELD

This application relates to the communication field, and more specifically, to a configuration method and apparatus.

### BACKGROUND

With the continuous development of a fifth generation communication system, a data transmission delay is continuously reduced, and a transmission capacity is gradually increased. Some multimedia services, such as video transmission, cloud gaming (cloud gaming, CG), and extended reality (extended reality, XR) services that require high real-time performance and a large data capacity gradually appear in a communication system based on a fifth generation mobile communication technology (5th generation mobile network, 5G).

With a rapid increase in a communication transmission rate, a video transmission service has gradually become one of core services in a current network. An extended reality technology is continuously improved. Therefore, compared with a conventional video service, the XR provides users with brand-new visual experience.

People increasingly want to improve XR experience by using user equipment (user equipment, UE) such as a head-mounted display (head-mounted display, HMD) or smart glasses. However, compared with a smartphone, the user equipment is more sensitive to power consumption than the smartphone. Therefore, for the foregoing services, on the basis of ensuring user experience, power consumption of the user equipment becomes a key problem in current research.

### SUMMARY

This application provides a configuration method and apparatus, so that power consumption of a terminal is reduced while user experience is ensured.

According to a first aspect, a configuration method is provided. The method may be performed by an access network device, or may be performed by a chip or a circuit configured in the access network device. This is not limited in this application. The method includes: receiving a first cycle from a core network element and a second cycle from a terminal, where the first cycle is an initial service cycle or a first traffic shaping service cycle, and the second cycle is a service cycle expected by the terminal; and configuring a discontinuous reception DRX cycle for the terminal based on the first cycle and the second cycle.

Optionally, the initial service cycle is a cycle in which an application network element generates a data unit in a transmission process of service data. For example, when a service is a video service or an XR service, the data unit may be a video frame, a video frame slice (slice), or a video frame tile (tile). The first traffic shaping service cycle is a cycle that is obtained after a user plane network element performs traffic shaping on a data unit when the data unit passes through a core network element, for example, the user plane network element. The service cycle expected by the terminal is a cycle in which the data unit is expected by the terminal, based on a battery level or other information of the terminal, to arrive at the terminal.

According to the foregoing solution, the access network device obtains cycle information of the service, to configure the DRX cycle that may match the service. Therefore, power consumption of the terminal is reduced while user experience is ensured.

With reference to the first aspect, in some implementations of the first aspect, traffic shaping is performed on the received data unit based on the first cycle and the second cycle. Traffic shaping is performed on the data unit, so that delay variation is alleviated when the data unit is transmitted in a network.

With reference to the first aspect, in some implementations of the first aspect, a second traffic shaping service cycle obtained after traffic shaping is performed is obtained, where the second traffic shaping service cycle corresponds to the DRX cycle. In other words, a cycle that is of a data unit and that is obtained after traffic shaping is performed is related to the DRX cycle. The cycle that is of the data unit and that is obtained after traffic shaping is performed may be equal to the DRX cycle or a multiple of the DRX cycle. Alternatively, the DRX cycle is a multiple of the cycle of the data unit. A specific corresponding relationship between the cycle of the data unit and the DRX cycle is not limited in this application. It may be understood that the DRX cycle herein may belong to a long DRX cycle set or a short DRX cycle set. This is not limited in this application.

According to the foregoing solution, on a basis of that the DRX cycle configured by the access network device for the terminal matches the cycle of the data unit, delay variation is alleviated when the data unit is transmitted in a network.

With reference to the first aspect, in some implementations of the first aspect, the method further includes: obtaining first information, where the first information indicates a transmission integrity requirement of the data unit, the data unit includes N data packets, each of the N data packets includes a same first identifier, the first identifier is used to identify the data unit, and N is a positive integer; and sending sleep indication information to the terminal based on the first information and the first identifier.

According to the foregoing solution, on a basis that the access network device configures, for the terminal, the DRX cycle that matches the transmission service, when the data unit has been transmitted, the access network device may further send, based on the integrity requirement of the transmission service, the sleep indication information indicating the terminal to enter a sleep state. Therefore, power consumption of the terminal is further reduced.

With reference to the first aspect, in some implementations of the first aspect, each of the N data packets further includes a second identifier, where the second identifier is used to identify the data packet. The sleep indication information is sent to the terminal based on the first information, the first identifier, and the second identifier.

According to the foregoing solution, the access network device may further accurately determine whether the data unit has been transmitted, and then send the sleep indication information when the data unit has been transmitted, to indicate the terminal to enter the sleep state.

With reference to the first aspect, in some implementations of the first aspect, a quality of service QoS configuration profile is received, where the QoS configuration profile includes the initial service cycle.

With reference to the first aspect, in some implementations of the first aspect, a QoS configuration profile is received, where the QoS configuration profile includes the first information.

According to a second aspect, a communication method is provided. The method may be performed by an access network device, or may be performed by a chip or a circuit configured in the access network device. This is not limited in this application. The method includes: obtaining first information, where the first information indicates a transmission integrity requirement of a data unit, the data unit includes N data packets, each of the N data packets includes a same first identifier, the first identifier is used to identify the data unit, and N is a positive integer; and sending sleep indication information to a terminal based on the first information and the first identifier.

According to the foregoing solution, when the data unit has been transmitted, the access network device may send, based on the integrity requirement of the transmission service, the sleep indication information indicating the terminal to enter a sleep state. Therefore, power consumption of the terminal is reduced.

With reference to the second aspect, in some implementations of the second aspect, each of the N data packets further includes a second identifier, where the second identifier is used to identify the data packet. The sleep indication information is sent to the terminal based on the first information, the first identifier, and the second identifier.

With reference to the second aspect, in some implementations of the second aspect, a first cycle from a core network element and a second cycle from the terminal are received, where the first cycle is an initial service cycle or a first traffic shaping service cycle, and the second cycle is a service cycle expected by the terminal. A DRX cycle is configured for the terminal based on the first cycle and the second cycle.

It may be understood that when the first cycle is the initial service cycle, the core network element may be a user plane network element, or may be a session management network element. When the first cycle is the first traffic shaping service cycle, the core network element may be a user plane network element.

With reference to the second aspect, in some implementations of the second aspect, traffic shaping is performed on the received data unit based on the first cycle and the second cycle.

With reference to the second aspect, in some implementations of the second aspect, a second traffic shaping service cycle obtained after traffic shaping is performed is obtained, where the second traffic shaping service cycle corresponds to the DRX cycle.

With reference to the second aspect, in some implementations of the second aspect, a QoS configuration profile is received, where the QoS configuration profile includes the first information.

With reference to the second aspect, in some implementations of the second aspect, a QoS configuration profile is received, where the QoS configuration profile includes the initial service cycle.

It may be understood that for beneficial effects of the second aspect or the implementations of the second aspect, refer to descriptions of beneficial effects of the first aspect or the implementations of the first aspect. Details are not described herein again.

According to a third aspect, a communication method is provided. The method may be performed by a session management network element, or may be performed by a chip or a circuit configured in the session management network element. This is not limited in this application. The method includes: obtaining an initial service cycle and/or first information, where the initial service cycle is a cycle in which an application network element generates a data unit in a transmission process of service data, the initial service cycle is used to configure a DRX cycle for a terminal, and the first information indicates a transmission integrity requirement of the data unit; and sending a QoS configuration file to an access network device, where the QoS configuration file includes the initial service cycle and/or the first information.

With reference to the third aspect, in some implementations of the third aspect, the first information includes type information of a transmission service or 1-bit indication information.

According to the foregoing solution, if the first information is the type information of the transmission service, the session management network element may indicate, based on a type of the transmission service, whether the data unit has a transmission integrity requirement. Therefore, resources are saved.

With reference to the third aspect, in some implementations of the third aspect, a packet detection rule PDR is sent to a session management network element, where the PDR includes the initial service cycle and/or the first information. The PDR is used to detect first identifiers of N data packets belonging to the data unit, where the first identifier is used to identify the data unit, and N is a positive integer.

According to a fourth aspect, a communication method is provided. The method may be performed by a user plane network element, or may be performed by a chip or a circuit configured in the user plane network element. This is not limited in this application. The method includes: receiving an initial service cycle from a core network element and/or a service cycle expected by a terminal; and performing traffic shaping on a received data unit based on the initial service cycle and/or the service cycle expected by the terminal, to obtain a first traffic shaping service cycle obtained after traffic shaping is performed, where the first traffic shaping service cycle is used to configure a DRX cycle for the terminal. It may be understood that the core network element in the foregoing solution may be a session management network element.

With reference to the fourth aspect, in some implementations of the fourth aspect, a PDR is received, where the PDR includes the initial service cycle.

With reference to the fourth aspect, in some implementations of the fourth aspect, the PDR further includes first information. The first information indicates a transmission integrity requirement of the data unit. First identifiers of N data packets belonging to the data unit are detected based on the PDR. The initial service cycle and/or the first identifier is encapsulated into header information of a general packet radio system tunneling protocol GTP, where the first identifier is used to identify the data unit, and N is a positive integer.

According to a fifth aspect, a communication method is provided. The method may be performed by an application network element, or may be performed by a chip or a circuit configured in the application network element. This is not limited in this application. The method includes: sending an initial service cycle and/or first information, where the initial service cycle is used to configure a DRX cycle for a terminal, and the first information indicates a transmission integrity requirement of a data unit.

With reference to the fifth aspect, in some implementations of the fifth aspect, the first information includes type information of a transmission service or 1-bit indication information.

According to a sixth aspect, a data transmission method is provided. The method may be performed by a server, or may be performed by a chip or a circuit configured in the server. This is not limited in this application. The method includes: sending a data packet, where the data packet includes a first identifier, the first identifier is used to identify a data unit, the data unit includes N data packets, and N is a positive integer.

It may be understood that the data packet sent in the foregoing solution may be one or more of the N data packets. This is not limited in this application.

With reference to the sixth aspect, in some implementations of the sixth aspect, the data packet further includes a second identifier, where the second identifier is used to identify the data packet.

According to a seventh aspect, a configuration method is provided. The method may be performed by a terminal, or may be performed by a chip or a circuit configured in the terminal. This is not limited in this application. The method includes: sending an expected service cycle to an access network device; and receiving DRX cycle configuration information from the access network device.

Optionally, the DRX cycle corresponds to the expected service cycle.

According to the foregoing solution, the DRX cycle configured by the access network device is more applicable to a current status of the terminal.

With reference to the seventh aspect, in some implementations of the seventh aspect, the method further includes: receiving sleep indication information from the access network device; and entering a sleep state based on the sleep indication information.

According to an eighth aspect, a communication apparatus is provided. The communication apparatus is configured to perform the method according to any one of the first aspect, the second aspect, the possible implementations of the first aspect, or the possible implementations of the second aspect. Specifically, the communication apparatus may include modules configured to perform the method according to any one of the first aspect, the second aspect, the possible implementations of the first aspect, or the possible implementations of the second aspect.

According to a ninth aspect, a communication apparatus is provided. The communication apparatus is configured to perform the method according to any one of the third aspect to the seventh aspect or any possible implementation of the third aspect to the seventh aspect. Specifically, the communication apparatus may include modules configured to perform the method according to any one of the third aspect to the seventh aspect or any possible implementation of the third aspect to the seventh aspect.

According to a tenth aspect, a communication apparatus is provided, and includes a processor. The processor is coupled to a memory, and may be configured to execute instructions in the memory, to implement the method according to any one of the first aspect or the second aspect, and the possible implementations of the first aspect or the second aspect. Optionally, the communication apparatus further includes the memory. Optionally, the communication apparatus further includes a communication interface. The processor is coupled to the communication interface, and the communication interface is configured to input and/or output information. The information includes at least one of instructions and data.

In an implementation, the communication apparatus is an access network device. When the communication apparatus is an access network device, the communication interface may be a transceiver or an input/output interface.

In another implementation, the communication apparatus is a chip or a chip system. When the communication apparatus is a chip or a chip system, the communication interface may be an input/output interface, an interface circuit, an output circuit, an input circuit, a pin, a related circuit, or the like on the chip or the chip system. The processor may alternatively be a processing circuit or a logic circuit.

In another implementation, the communication apparatus is a chip or a chip system configured in the access network device.

Optionally, the transceiver may be a transceiver circuit. Optionally, the input/output interface may be an input/output circuit.

According to an eleventh aspect, a communication apparatus is provided, and includes a processor. The processor is coupled to a memory, and may be configured to execute instructions in the memory, to implement the method according to any one of the third aspect to the seventh aspect and the possible implementations of the third aspect to the seventh aspect. Optionally, the communication apparatus further includes the memory. Optionally, the communication apparatus further includes a communication interface. The processor is coupled to the communication interface, and the communication interface is configured to input and/or output information. The information includes at least one of instructions and data.

In an implementation, the communication apparatus is a core network element or a terminal. When the communication apparatus is a core network element or a terminal, the communication interface may be a transceiver or an input/output interface.

In another implementation, the communication apparatus is a chip or a chip system. When the communication apparatus is a chip or a chip system, the communication interface may be an input/output interface, an interface circuit, an output circuit, an input circuit, a pin, a related circuit, or the like on the chip or the chip system. The processor may alternatively be a processing circuit or a logic circuit.

In another implementation, the communication apparatus is a chip or a chip system configured in the core network element or the terminal.

Optionally, the transceiver may be a transceiver circuit. Optionally, the input/output interface may be an input/output circuit.

According to a twelfth aspect, a processor is provided, and includes an input circuit, an output circuit, and a processing circuit. The processing circuit is configured to: receive a signal by using the input circuit, and transmit a signal by using the output circuit, so that the processor performs the method according to any one of the first aspect to the seventh aspect, and the possible implementations of the first aspect to the seventh aspect.

In a specific implementation process, the processor may be one or more chips, the input circuit may be an input pin, the output circuit may be an output pin, and the processing circuit may be a transistor, a gate circuit, a trigger, any logic circuit, and the like. The input signal received by the input circuit may be received and input by, for example, but not limited to, a receiver. The signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and the circuits are not limited in embodiments of this application.

According to a thirteenth aspect, a processing apparatus is provided, and includes a processor and a memory. The processor is configured to read instructions stored in the memory, and may receive a signal by using a receiver, and transmit a signal by using a transmitter, to perform the method according to any one of the first aspect to the seventh aspect, and the possible implementations of the first aspect to the seventh aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated on one chip, or may be separately disposed in different chips. A type of the memory and a manner in which the memory and the processor are disposed are not limited in this embodiment of this application.

It may be understood that, a related data exchange process such as sending of indication information may be a process in which the processor outputs the indication information, and receiving of capability information may be a process in which the processor receives the input capability information. Specifically, data output by the processor may be output to the transmitter, and input data received by the processor may be from the receiver. The transmitter and the receiver may be collectively referred to as a transceiver.

The processing apparatus in the thirteenth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated on the processor, or may be located outside the processor and exist independently.

According to a fourteenth aspect, a computer program product is provided. The computer program product includes a computer program (which is also referred to as code or instructions). When the computer program is run, a computer performs the method according to any one of the first aspect to the seventh aspect and the possible implementations of the first aspect to the seventh aspect.

According to a fifteenth aspect, a computer-readable storage medium is provided. The computer-readable storage medium stores a computer program (which may also be referred to as code or instructions). When the computer program is run on a computer, the computer performs the method according to any one of the first aspect to the seventh aspect and the possible implementations of the first aspect to the seventh aspect.

According to a sixteenth aspect, a communication system is provided, and includes the foregoing access network device, the core network element, and the terminal.

### BRIEF DESCRIPTION OF DRAWINGS

FIG. 1 is a schematic diagram of a network architecture according to an embodiment of this application;
FIG. 2 is a schematic diagram of a network scenario architecture applicable to an embodiment of this application;
FIG. 3 is a schematic diagram of another network scenario architecture applicable to an embodiment of this application;
FIG. 4 is a schematic diagram of a service data cyclicity applicable to an embodiment of this application;
FIG. 5 is a schematic diagram of a transmission process of service data in a network applicable to an embodiment of this application;
FIG. 6 is a schematic diagram of a DRX cycle applicable to an embodiment of this application;
FIG. 7 is a schematic diagram of configuration of a DRX cycle applicable to an embodiment of this application;
FIG. 8 is a schematic diagram of configuration of active time applicable to an embodiment of this application;
FIG. 9 is a schematic flowchart of configuring a DRX cycle according to an embodiment of this application;
FIG. 10 is a schematic diagram of traffic shaping applicable to an embodiment of this application;
FIG. 11 is a schematic diagram of a traffic shaping process according to an embodiment of this application;
FIG. 12 is a schematic flowchart of a communication method according to an embodiment of this application;
FIG. 13 is a schematic flowchart of another communication method according to an embodiment of this application;
FIG. 14 is a schematic block diagram of a communication apparatus according to an embodiment of this application;
FIG. 15 is a schematic block diagram of another communication apparatus according to an embodiment of this application;
FIG. 16 is a schematic block diagram of still another communication apparatus according to an embodiment of this application; and
FIG. 17 is a schematic block diagram of yet another communication apparatus according to an embodiment of this application.

### DESCRIPTION OF EMBODIMENTS

The following describes technical solutions of this application with reference to accompanying drawings.

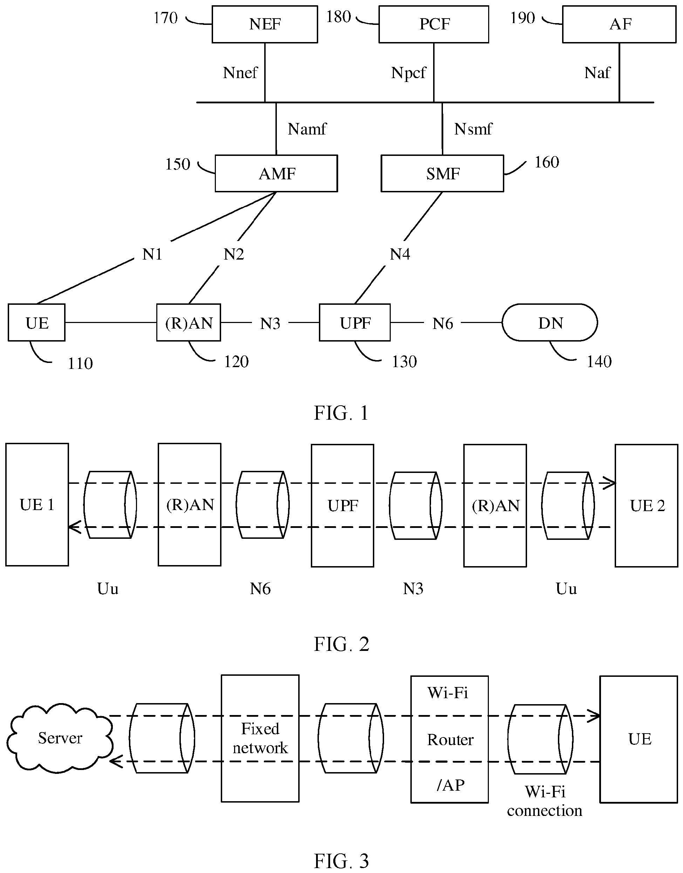

FIG. 1 is a schematic diagram of a network architecture according to an embodiment of this application. As shown in FIG. 1, the network architecture may include user equipment 110, a (radio) access network device 120, a user plane network element 130, a data network 140, an access management network element 150, a session management network element 160, a network exposure network element 170, a policy control network element 180, an application network element 190, and the like. The following separately describes the network elements in the network architecture.
1: The user equipment (user equipment, UE) 110 may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

2: The (radio) access network (radio access network, (R)AN) device 120 may also be referred to as an access device. The (R)AN may manage a radio resource, provide an access service for the user equipment, and complete forwarding of user equipment data between the user equipment and a core network. The (R)AN may also be understood as a base station in a network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and a service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information of the RRC layer is generated by the CU, and is finally encapsulated, by using a PHY layer of the DU, into information of the PHY layer, or is converted from information of the PHY layer. Therefore, in this architecture, higher layer signaling, for example, RRC layer signaling, may also be considered to be sent by the DU, or sent by the DU+AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

3: The user plane network element 130 serves as an interface connecting to the data network, and implements functions such as user plane data forwarding, charging statistics based on a session/flow level, and bandwidth throttling, that is, packet routing and forwarding, and quality of service (quality of service, QoS) processing of the user plane data.

In a long term evolution (long term evolution, LTE) communication system, the user plane network element may be a serving gateway user plane (serving gateway user plane, SGW-U), a packet data network gateway user plane (packet data network gateway user plane, PGW-U), or a network element in which an SGW-U and a PGW-U are co-deployed. In a 5G communication system, the user plane network element may be a user plane function (user plane function, UPF) network element.

4: The data network 140 provides a service such as an operator service, Internet access, or a third-party service, and includes a server. A server end implements video source coding, rendering, and the like.

In the 5G communication system, the data network may be a data network (data network, DN).

5: The access management network element 150 is mainly used for mobility management, access management, and the like, and may be configured to implement functions such as lawful interception and access authorization/authentication, other than session management in functions of a mobility management entity (mobility management entity, MME).

In an LTE communication system, the access management network element may be an MME network element. In the 5G communication system, the access management network element may be an access and mobility management function (access and mobility management function, AMF), and mainly performs functions such as mobility management and access authentication/authorization. In addition, the access management network element is further responsible for transferring a user policy between the terminal and a policy control function (policy control function, PCF) network element.

6: The session management network element 160 is mainly configured to: manage a session, allocate and manage an Internet protocol (Internet protocol, IP) address of the user equipment, select a termination node at which a user plane function interface and a policy control and charging function interface may be managed, perform downlink data notification, and the like.

In the LTE communication system, the session management network element may be a session management network element or a serving gateway control plane (serving gateway control plane, SGW-C), a packet data network gateway control plane (packet data network gateway control plane, PGW-C), or a network element in which an SGW-C and a PGW-C are co-deployed. In the 5G communication system, the session management network element may be a session management function (session management function, SMF) network element, and completes IP address allocation of a terminal, UPF selection, charging and QoS policy control, and the like.

7: The network exposure network element 170 in the LTE communication system may be a service capability exposure function (service capability exposure function, SCEF) network element. In the 5G communication system, the network exposure network element may be a network exposure function (network element function, NEF) network element, and is mainly configured to expose a service and a capability of a 3GPP network function to an AF, and may also enable the AF to provide information for the 3GPP network function.

8: The policy control network element 180 includes a user subscription data management function, a policy control function, a charging policy control function, quality of service (quality of service, QoS) control, and the like, and is a unified policy framework for guiding network behavior, and provides policy rule information and the like for a control plane function network element (for example, the AMF network element or the SMF network element).

In the LTE communication system, the policy control network element may be a policy control and charging function (policy control and charging function, PCRF). In the 5G communication system, the policy control network element may be the PCF.

In the 5G communication system, the application network element may be a network slice selection function (network slice selection function, NSSF) network element.

9: The application network element 190 in the 5G communication system may be an application function (application function, AF) network element, represents an application function of a third party or an operator, is an interface for obtaining external application data in a 5G network, and is mainly configured to transfer a requirement of an application side to a network side.

In a future communication system, for example, a 6G communication system, the names of the foregoing network elements or the devices may still be the same as those in the 4G or 5G communication system, or may have other names. This is not limited in embodiments of this application. Functions of the foregoing network elements or the devices may be completed by an independent network element, or may be completed by several network elements together. During an actual deployment, network elements in a core network may be deployed on a same physical device or different physical devices. For example, in a possible deployment, an AMF and an SMF may be deployed on a same physical device. For another example, a network element of a 5G core network and a network element of a 4G core network may be deployed on a same physical device. This is not limited in embodiments of this application.

It may be understood that FIG. 1 is merely an example, and does not constitute any limitation on the protection scope of this application. The communication method provided in embodiments of this application may further relate to a network element that is not shown in FIG. 1. Certainly, the communication method provided in embodiments of this application may include only some network elements shown in FIG. 1.

In the network architecture shown in FIG. 1, the terminal is connected to the AMF through an N1 interface, the (R)AN is connected to the AMF through an N2 interface, and the (R)AN is connected to the UPF through an N3 interface. UPFs are connected to each other through an N9 interface, and the UPF is interconnected to the DN through an N6 interface. The SMF controls the UPF through an N4 interface.

It may be understood that the foregoing network architecture used in embodiments of this application is merely an example for description, and a network architecture applicable to embodiment of this application is not limited thereto. Any network architecture that may implement functions of the foregoing network elements is applicable to embodiment of this application.

For example, in a terminal-network-terminal architecture scenario, as shown in FIG. 2, the scenario may be a tactile Internet. One terminal is a tactile user and a human system interface in a master domain, and the other terminal is a remotely controlled robot or a teleoperator in a controlled domain. A network transmission core network and an access network include LTE, 5G, or a next-generation radio 6G. The master domain receives an audio/video feedback signal from the controlled domain. The master domain and the controlled domain are connected by using a bidirectional communication link on a network domain with the help of various commands and feedback signals, thereby enclosing a global control loop.

For another example, in a Wi-Fi scenario, as shown in FIG. 3, in this scenario, a cloud server transmits XR media data or a common video to a terminal (an XR device) by using a fixed network and a Wi-Fi router/AP/set-top box.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a future evolved communication system, vehicle-to-X (vehicle-to-X, V2X), where the V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), a long term evolution-vehicle (long term evolution-vehicle, LTE-V), an Internet of vehicles, machine type communication (machine type communication, MTC), an Internet of things (Internet of things, IoT), long term evolution-machine (long term evolution-machine, LTE-M), machine to machine (machine to machine, M2M), or the like.

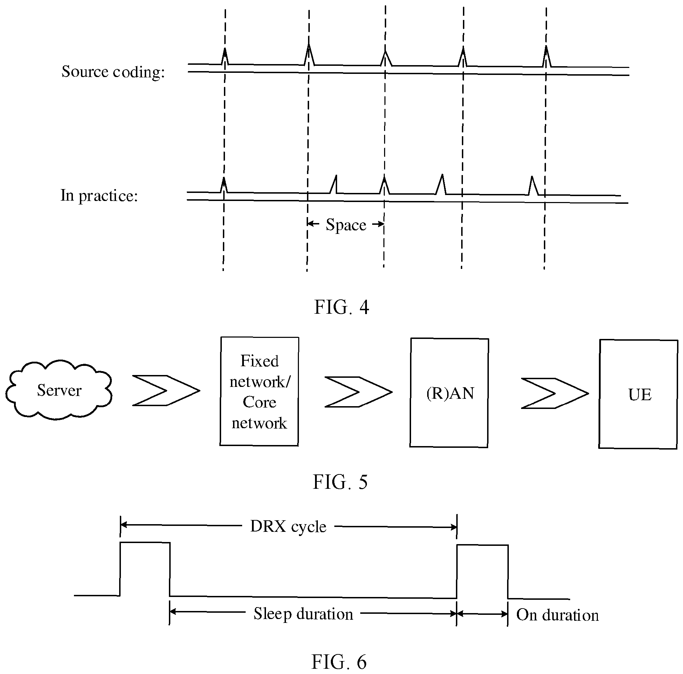

FIG. 4 is a schematic diagram of a service data cyclicity applicable to an embodiment of this application.

An XR transmission service and a video transmission service are used as an example, where the XR includes virtual reality (virtual reality, VR), augmented reality (augmented reality, AR), and mixed reality (mixed reality, MR). Generally, the service data is periodically transmitted based on a frame rate. However, due to factors such as server coding processing and fixed network/core network transmission, the service data may fail to arrive at a base station on a RAN side technically based on a cycle. For example, as shown in FIG. 4, for video data with a frame rate of 60 frames per second, one video frame arrives every 16.67 milliseconds in an ideal case. However, video frames do not arrive at the base station technically based on an interframe space of 16.67 ms.

In addition, in this type of service, the size of service data thereof varies with time.

FIG. 5 is a schematic diagram of a transmission process of service data in a network applicable to an embodiment of this application.

An XR transmission service and a video transmission service are used as an example. In a transmission process of a video frame, one video frame may be divided into several Internet protocol (Internet protocol, IP) packets at a transport layer, for example, 50 IP packets. The IP packets are first transmitted to a core network, and are then transmitted to a terminal through an access network device. In a transmission process in a network, if one of the IP packets fails to be transmitted, the entire video frame cannot be restored.

For transmission of real-time multimedia such XR and a video, user experience is important. Therefore, it needs to ensure that a video frame is correctly transmitted within a tolerable delay as much as possible. In addition to ensuring quality of experience (quality of experience, QoE) of a user, power consumption of a device is also an important factor to be considered.

Generation and arrival of data packets in the XR transmission service and the video transmission service are usually not continuous. At a terminal side, from a perspective of a delay, if downlink control signaling of a base station is monitored in each slot, it is beneficial to receiving an uplink grant or downlink data, but power consumption of the terminal is increased. Therefore, to reduce power consumption of the terminal, when no data is to be transmitted, power consumption may be reduced by stopping receiving a physical downlink control channel (physical downlink control channel, PDCCH). In this case, PDCCH blind detection is stopped, and battery use time is prolonged.

Use of a discontinuous reception (discontinuous reception, DRX) technology may also achieve the purpose of power saving. A basic mechanism of DRX is to configure a DRX cycle (DRX cycle) for a terminal. As shown in FIG. 6, in a period of on duration (on duration), a terminal normally monitors a PDCCH. In another period, the terminal has an opportunity to enter a sleep state and does not receive the PDCCH, to reduce power consumption. It should be noted that, although the terminal in sleep duration does not receive the PDCCH, the terminal may receive another signal (for example, a reference signal) and/or data of another physical channel, such as a physical downlink shared channel (physical downlink shared channel, PDSCH), and an acknowledgment (acknowledge, ACK) signal. For example, in semi-persistent scheduling (semi-persistent scheduling, SPS), the terminal in the sleep duration may periodically receive the PDSCH in a configured downlink subframe.

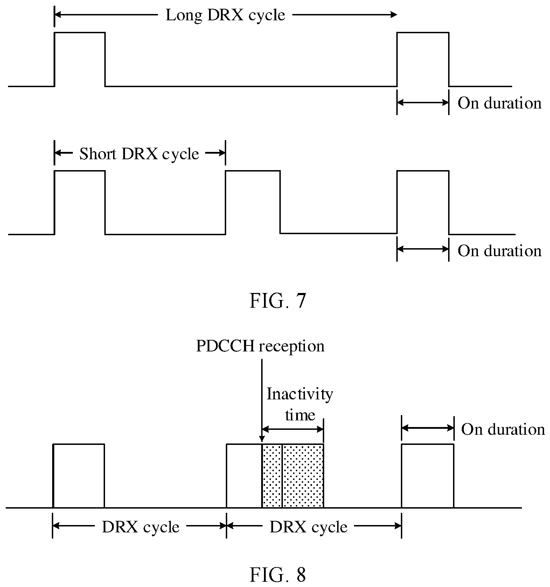

A balance between power saving and a data delay needs to be considered when a DRX cycle is selected. In one aspect, a long DRX cycle is beneficial for prolonging the battery use time of the terminal. In another aspect, a short DRX cycle is beneficial for faster response when there is new data to be transmitted. To meet the foregoing requirement, two DRX cycles may be configured for the terminal: a short DRX cycle and a long DRX cycle, as shown in FIG. 7. However, at any given moment, a terminal may use configuration of only one of the DRX cycles.

The DRX cycle is configured by a base station. The terminal may report an expected DRX cycle parameter to the base station, to provide a reference for the base station. Specifically, the DRX cycle parameter may be reported in a form of assistance information in UE assistance information.

In most cases, after the terminal is scheduled, and receives or sends data in a slot, the terminal may be continuously scheduled in next several slots. If the terminal does not receive or send the data until a next DRX cycle, an extra delay is caused. To reduce such a delay, after being scheduled, the terminal may enter active time, and start a DRX inactivity timer (inactivity timer), as shown in FIG. 8. The PDCCH is still monitored in the active time until the DRX inactivity timer expires. If the terminal is scheduled midway again, the timer is reset.

To avoid a case in which the terminal cannot enter the sleep state in time when excessively long periods are set for an on-duration timer and the DRX inactivity timer, the base station may send a DRX command (DRX command) to the terminal by using a media access control (media access control, MAC) control element (control element, CE). After receiving the DRX command, the terminal may directly enter the sleep state.

In this embodiment of this application, an XR service and a video service are used as an example. Power consumption of the terminal is further reduced while user experience is ensured. Certainly, the solution in this embodiment of this application is not only applicable to the XR service and the video service, but also applicable to other services having a similar requirement. This is not limited herein.

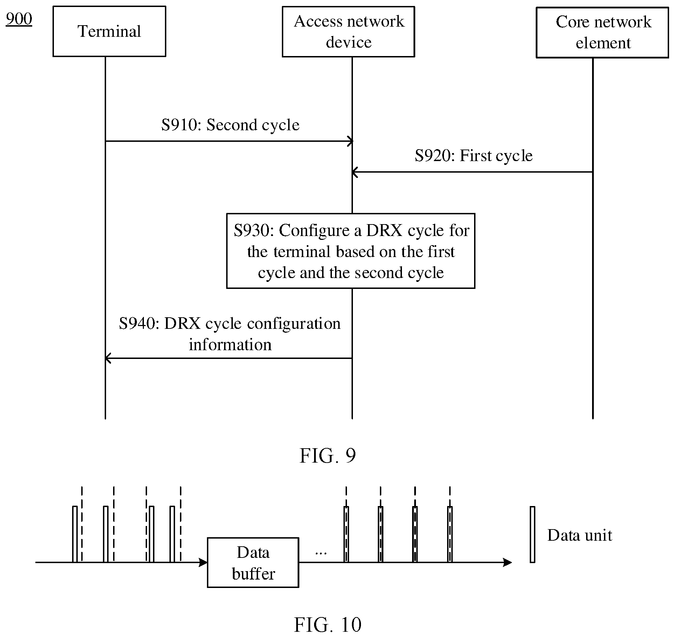

FIG. 9 is a schematic flowchart of configuring a DRX cycle according to an embodiment of this application. A method 900 includes the following steps.

Step S910: An access network device receives a first cycle from a core network element, where the first cycle is an initial service cycle or a first traffic shaping service cycle.

It may be understood that the initial service cycle is a cycle in which an application network element generates a data unit in a service transmission process. Then, the initial service cycle is sent to the access network device by using a session management network element or a user plane network element. For example, when the transmission service is a video service or an XR service, the data unit may be a video frame, a video frame slice (slice), a video frame tile (tile), or the like. The first traffic shaping service cycle is a cycle that is of a data unit and that is obtained after a user plane network element performs traffic shaping on the data unit when the data unit passes through the user plane network element.

It may be understood that an image or a video frame may be divided into one or more slices. The slice is a data structure that may be independently encoded/decoded without depending on another slice in the same image or in the video frame. The slice is in a strip shape, and may also be referred to as a fragmentation. An image or a video frame may also be horizontally or vertically divided into one or more rectangular areas, and these rectangular areas are referred to as tiles. The tile is used to enhance a parallel processing capability of high efficiency video coding (high efficiency video coding, HEVC). The tile may be independently encoded/decoded, and the tile may also be referred to as a stripe.

Step S920: The access network device receives a second cycle from a terminal, where the second cycle is a service cycle expected by the terminal.

It may be understood that the service cycle expected by the terminal is a cycle in which the data unit is expected by the terminal, based on a battery level or other information of the terminal, to arrive at the terminal.

Optionally, the terminal may report the expected service cycle by using assistance information, for example, report the expected service cycle in UE assistance information.

It may also be understood that step S910 and step S920 are not performed in a specified sequence, or may be performed simultaneously. This is not limited in this application.

Step S930: The access network device configures a DRX cycle for the terminal based on the first cycle and the second cycle.

Optionally, in a solution that may be an alternative to step S930, the access network device may configure a DRX cycle for the terminal based on the first cycle or the second cycle.

Specifically, the access network device selects a cycle from a preset set based on the first cycle and/or the second cycle to configure the DRX cycle for the terminal. The preset set includes short DRX cycles, long DRX cycles, or short DRX cycles and long DRX cycles. For example, a long DRX cycle set is {10, 20, 32, 40, 60, ...} milliseconds (ms), and a short DRX cycle set is {2, 3, 4, 5, 6, 7, 8, 10, 14, 16, 20, 30, 32, 35, ...} ms. An existing video frame rate is generally 30/60/90/120 frames per second (frames per second, FPS), and corresponding initial service cycles are respectively 33.33/16.67/11.11/8.33 ms.

In a possible implementation, a cycle closest to the first cycle and/or the second cycle is selected from the preset set to configure the DRX cycle for the terminal. For example, if the initial service cycle is closer to a value in the short DRX cycle set, a cycle is selected from the short DRX cycle set to configure the DRX cycle. It is assumed that the initial service cycle is 16.67 ms. The closest DRX cycle may be a minimum configurable DRX cycle (20 ms) greater than the initial service cycle, or may be a maximum configurable DRX cycle (16 ms) less than the initial service cycle.

In another possible implementation, some values, for example, one or more of 33.33 ms, 16.67 ms, 11.11 ms, and 8.33 ms, are added to the value sets of the short DRX cycle and the long DRX cycle, to match frame rates of the XR service and the video service. Certainly, there may be another value. This is not limited in this application.

Optionally, the access network device may perform traffic shaping on the received data unit based on the first cycle and/or the second cycle.

Optionally, a second traffic shaping service cycle obtained after traffic shaping is performed is obtained, and the DRX cycle is configured for the terminal based on the second traffic shaping service cycle.

For a specific traffic shaping process, refer to related descriptions in FIG. 10. Details are not described herein again. It may be understood that delay variation occurs in a process in which the data unit is transmitted from a server to each network node. In this solution, the traffic shaping is performed, so that the delay variation is alleviated when the data unit is transmitted in a network.

Optionally, the method 900 further includes step S940: The access network device sends DRX cycle configuration information to the terminal. Correspondingly, the terminal receives the DRX cycle configuration information. The terminal may configure the DRX cycle based on the DRX cycle configuration information.

According to the foregoing solution, the access network device obtains cycle information of the service, to configure the DRX cycle that may match the service. Therefore, power consumption of the terminal can be reduced.

It may be understood that the DRX cycle configuration described in the method 900 and below may be a long DRX cycle configuration, or a short DRX cycle configuration. This is not limited in this application.

The following provides an example description of traffic shaping in this application with reference to FIG. 10. FIG. 10 is a schematic diagram of traffic shaping applicable to an embodiment of this application.

When data units are transmitted to an access network device, time intervals at which the data units arrive at the access network device are irregular. In this application, a data buffer performs traffic shaping on the data units that irregularly arrive at the access network device, so that the data units are output periodically.

Specifically, the access network device performs traffic shaping on the received data units based on the first cycle and the second cycle. In other words, the cycle that is of the data unit and that is obtained after the access network device performs traffic shaping, namely, the second traffic shaping service cycle, may correspond to the first cycle, or the second cycle. The correspondence means that the second traffic shaping service cycle is equal to the first cycle or the second cycle, or may be equal to a multiple of the first cycle or the second cycle. Alternatively, it may be understood as that the first cycle or the second cycle is equal to a multiple of the second traffic shaping service cycle. A specific corresponding relationship between the second traffic shaping service cycle and the first cycle or the second cycle is not limited in this application. The second traffic shaping service cycle falls within the protection scope of this application provided that the second traffic shaping service cycle is determined based on the first cycle and/or the second cycle.

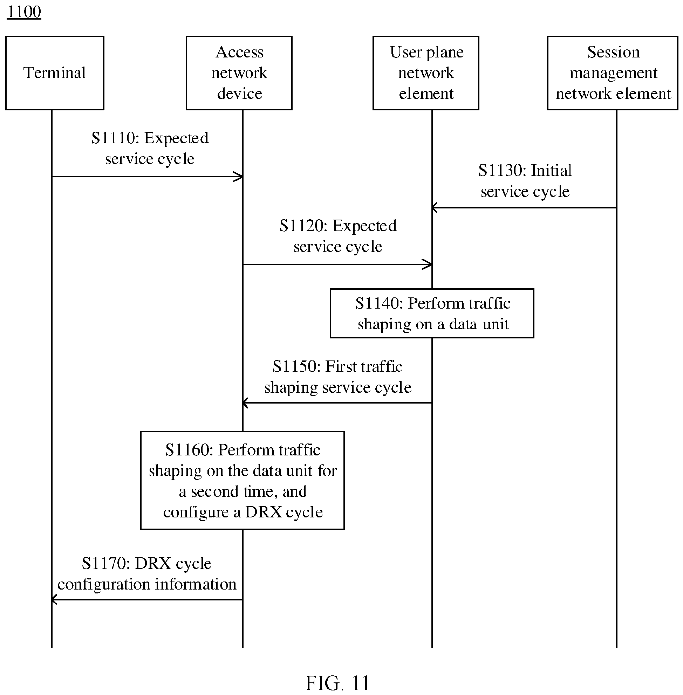

Optionally, when the first cycle is the first traffic shaping service cycle, the access network device receives the data units after the core network element has performed traffic shaping. For example, when the core network element is a user plane network element, a specific traffic shaping process is shown in FIG. 11. A method 1100 includes the following steps.

Step S1110 is included, which is the same as step S910.

Step S1120: The access network device reports a service cycle expected by the terminal to a user plane network element.

Step S1130: The user plane network element obtains the initial service cycle.

Optionally, the initial service cycle is carried in a packet detection rule (packet detection rule, PDR) sent to the user plane network element by a session management network element through an N4 interface.

Step S1140: The user plane network element performs traffic shaping on a received data unit based on the service cycle expected by the terminal and the initial service cycle, to obtain a first traffic shaping service cycle.

A cycle that is of the data unit and that is obtained after the user plane network element performs traffic shaping, namely, the first traffic shaping service cycle, may correspond to the service cycle expected by the terminal, or may correspond to the initial service cycle. The correspondence means that the first traffic shaping service cycle is equal to the service cycle expected by the terminal or the initial service cycle, may be equal to a multiple of the service cycle expected by the terminal or the initial service cycle, or may be understood as that the service cycle expected by the terminal or the initial service cycle is equal to a multiple of the first traffic shaping service cycle. A specific corresponding relationship between the first traffic shaping service cycle and the service cycle expected by the terminal or the initial service cycle is not limited in this application. The first traffic shaping service cycle falls within the protection scope of this application provided that the first traffic shaping service cycle is determined based on the service cycle expected by the terminal and/or the initial service cycle.

Step S1150: The user plane network element indicates the first traffic shaping service cycle to the access network device.

Optionally, the user plane network element may encapsulate, into a general packet radio system tunneling protocol (general packet radio system tunneling protocol, GTP) header (header) information, the information indicating the first traffic shaping service cycle, and send the header information to the access network device through an N3 interface.

Step S1160 is included, which is the same as the foregoing step S930 after the access network device obtains the first traffic shaping service cycle. Details are not described herein again.

Step S1170 is included, which is the same as the foregoing step S940. Details are not described herein again.

It may be understood that in the foregoing solution, the user plane network element does not obtain the service cycle expected by the terminal and the initial service cycle according to a specified sequence, and the user plane network element may obtain the service cycle expected by the terminal and the initial service cycle simultaneously. This is not limited in this application.

In this application, for the traffic shaping solution, it should be noted that, in a transmission process of the data unit, traffic shaping may be performed for one time or two times. If traffic shaping is performed for only one time, a network node that performs traffic shaping on the data unit may be an access network device, or may be a user plane network element. This is not limited in this application.

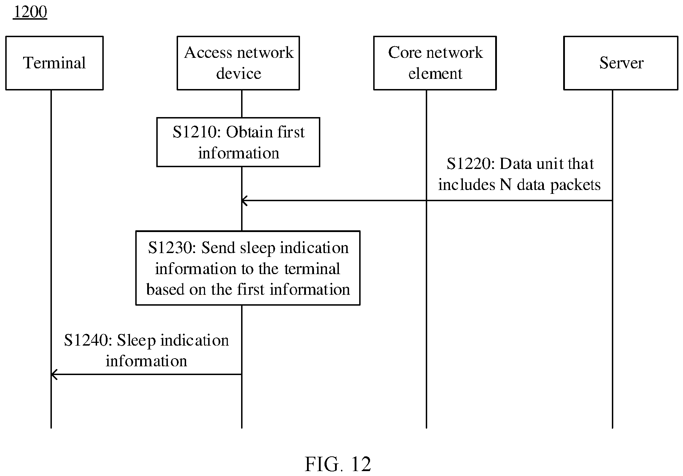

FIG. 12 is a schematic flowchart of a communication method according to an embodiment of this application. A method 1200 includes the following steps.

Step S1210: An access network device obtains first information, where the first information indicates a transmission integrity requirement of a data unit.

Optionally, the access network device may obtain the first information by receiving a QoS configuration profile from a core network element.

A transmission integrity requirement is a requirement that when a data unit is divided into a plurality of data packets in a transmission process, the plurality of data packets need to be completely transmitted.

It may be understood that the first information may be 1-bit indication information from an application network element. If the 1 bit is 0, it indicates that the data unit has a transmission integrity requirement, and if the 1 bit is 1, it indicates that the data unit does not have a transmission integrity requirement. Alternatively, if the 1 bit is 1, it indicates that the data unit has a transmission integrity requirement, and if the 1 bit is 0, it indicates that the data unit does not have a transmission integrity requirement. This is not limited in this application.

Alternatively, the first information may be obtained based on a type of the data unit. For example, a data packet belonging to a video frame has the transmission integrity requirement. Therefore, a manner of obtaining the first information is not limited in this application.

Step S1220: The access network device receives the data unit, where the data unit includes N data packets, each of the N data packets includes a same first identifier, the first identifier is used to identify the data unit, and N is a positive integer.

Optionally, each of the N data packets further includes a second identifier, where the second identifier is used to identify the data packet.

It may be understood that after a PDU session (where the PDU session provides data connectivity between a terminal and a data network, and data traffic of the terminal is carried by the PDU session) is established, when the N data packets are transmitted to the user plane network element, the user plane network element analyzes application layer data based on PDR(s) delivered by a session management network element, and divides a plurality of PDRs into a plurality of groups of PDRs based on group identifiers of groups to which the PDRs belong. In addition, the data packet including the first identifier or including the first identifier and the second identifier is detected. The user plane network element encapsulates the first identifier or the first identifier and the second identifier into GTP header information, and sends the data packet to the access network device through the N3 interface.

Step S1230: The access network device sends sleep indication information to the terminal based on the first information and the first identifier, for example, sends a DRX command to the terminal.

Specifically, the first identifier may indicate that the N data packets belong to one data unit. After obtaining the first information, the access network device determines whether integrity transmission of the data unit is needed. If the integrity transmission of the data unit is needed, the access network device determines, based on the first identifiers in the data packets, whether the data packets belonging to the same data unit have been transmitted. If the data packets have been transmitted, the sleep indication information is sent to the terminal. If the integrity transmission of the data unit is not needed, the access network device may still detect the data packets, but does not send the sleep indication information to the terminal.

For example, when the data unit is a video frame, the first identifier may be used to identify a frame number of the video frame, a size of the video frame, or a quantity of data packets belonging to the video frame. After determining that the video frame needs the integrity transmission, the access network device detects the first identifiers in the data packet, and then determines, based on the first identifiers, whether the video frame has been transmitted.

Optionally, the access network device sends the sleep indication information to the terminal based on the first information, the first identifier, and the second identifier.

Specifically, when data packets belonging to a same data unit further include second identifiers, the second identifiers are used to identify the data packets. The access network device determines, based on the first information, whether the data unit needs the integrity transmission. If the data unit needs the integrity transmission, the access network device determines, based on the first identifiers and the second identifiers in the data packets, whether the data packets belonging to the same data unit have been transmitted. If the data packets have been transmitted, the sleep indication information is sent to the terminal. If the data unit does not need to be transmitted completely, the access network device may still detect the data packets, but does not send the sleep indication information to the terminal.

For example, if the data unit is a video frame, the first identifier may be used to identify a frame number of the video frame, a bit size of the video frame, or a quantity of data packets belonging to the video frame. The second identifier may be used to identify an integer less than or equal to N, and may be used to identify a bit size of each data packet. For example, the first identifiers and the second identifiers may be 1/30, 2/30, 3/30, 4/30, ..., and the like, where 30 is the first identifier, indicating that there are 30 data packets belonging to the video frame, and 1, 2, 3, 4, ..., and the like are second identifiers. The first identifiers included in the 30 data packets are the same, and the second identifiers are different from each other. In this example, the access network device may determine, based on the first identifier and a second identifier in a transmitted data packet, whether the 30 data packets belonging to the video frame have been transmitted. If the data packets have been transmitted, the sleep indication information is sent to the terminal.

It may be understood that the foregoing example shows only one identification manner, and the data packets may be further identified in another manner. This is not limited in this application.

Step S1240: The access network device sends the sleep indication information to the terminal. Correspondingly, the terminal receives the sleep indication information, and enters a sleep state based on the sleep indication information.

According to the foregoing solution, when the data unit has been transmitted, the access network device may send, based on the integrity requirement of the transmission service, the sleep indication information indicating the terminal to enter a sleep state. Therefore, power consumption of the terminal is reduced.

The following describes manners of obtaining the first information and the initial service cycle.

Optionally, the application network element provides the initial service cycle and the first information for a control plane network element (for example, a network exposure network element or a policy control network element) for storage.

A session control network element obtains the initial service cycle and the first information from the control plane network element, and then configures the initial service cycle and the first information in a quality of service (quality of service, QoS) configuration profile (profile). It may be understood that the initial service cycle in this application may also be a frame rate, and a specific representation form of the initial service cycle is not limited in this application. A QoS guarantee mechanism for video and XR transmission services in 5G communication is used as an example. The QoS guarantee mechanism includes a QoS flow supporting a guaranteed bit rate (guaranteed bit rate, GBR) and a QoS flow supporting a non-guaranteed bit rate (non-guaranteed bit rate, Non-GBR). In 5G QoS management, a data packet is divided into several QoS flows, and each QoS flow is labeled by a QoS flow identifier (QoS flow identifier, QFI). Each QoS profile uses the QFI to ensure that services with different performance requirements are transmitted separately. A QoS flow configuration profile in which the initial service cycle and the first information are configured may be shown in Table 1.

**Table 1 QoS flow configuration profile**

| QoS flow attribute | Description |
|---|---|
| 5G QoS identifier (5QI) | 5G QoS identifier indicates radio characteristics of a QoS flow, and each QoS has the 5G QoS identifier |
| Allocation and retention priority (allocation and retention priority, ARP) | This indicates a priority level of a QoS flow over an NG interface, and is applicable to QoS flows between different UEs or between QoS flows within UE, where each QoS flow has allocation and retention priority |
| Guaranteed flow bit rate GFBR | A guaranteed data rate is available only to a GBR QoS flow for both uplink and downlink |
| Maximum flow bit rate MFBR | A maximum data rate is available only to the GBR QoS flow for both uplink and downlink |
| Notification control | This indicates whether a gNB reports a notification to a 5GC when QoS cannot be fulfilled, and this is available only for the GBR QoS flow |
| Maximum packet loss rate MPLR | The maximum packet loss rate indicates a maximum packet loss rate of a QoS flow that can be tolerated, and this maximum packet loss rate parameter is provided only to the GBR QoS flow |
| Initial service cycle | A cycle in which an application layer generates a data unit is available only to the GBR QoS flow, available to only a non-GBR QoS flow, or available to each QoS flow |
| First information | The first information is used to identify the QoS flow, to indicate whether data in the QoS flow needs to be grouped, and data packets in a same group are sent as a whole; and is available to only the GBR QoS flow, available to only the non-GBR QoS flow, or available to each QoS flows |

It may be understood that only some attributes of the QoS flow configuration profile are listed in table 1. In addition, the QoS flow configuration profile may further include another attribute, or may include only some attributes in table 1. This is not limited in this application.

Optionally, the access network device may obtain the initial service cycle and/or the first information by receiving the QoS configuration profile. When the QoS configuration profile does not include the first information, refer to the technical solution in which the first cycle is the initial service cycle in the method 900. Details are not described herein.

Optionally, the initial service cycle may be further configured in the PDR delivered by the session management network element.

When the QoS configuration profile does not include the initial service cycle, refer to the technical solution of the method 1200. Details are not described herein.

Another solution is provided. A QoS configuration profile includes both an initial service cycle and first information. In this case, refer to method 1300 in which the method 900 and the method 1200 are combined.

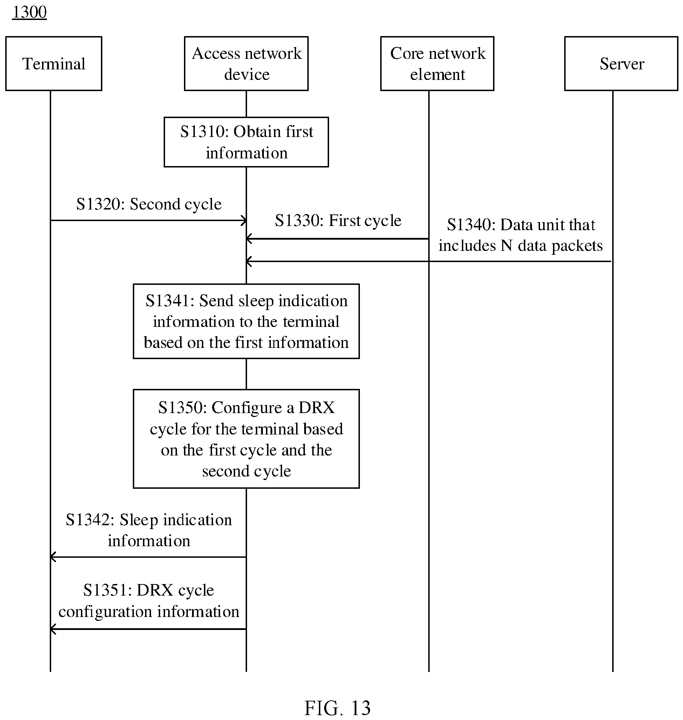

FIG. 13 is a schematic flowchart of a communication method according to an embodiment of this application.

A method 1300 includes steps in the method 900 and the method 1200.

Specifically, step S1310 is the same as step S1210, step S1320 is the same as step S910, step S1330 is the same as step S920, step S 1340 is the same as step S1220, step S1341 is the same as step S1230, step S1342 is the same as step S1240, step S1350 is the same as step S930, and step S1351 is the same as step S940.

It should be noted that step S1310, step S1320, and step S1330 are not subject to a specific sequence, and may be performed simultaneously. Steps that are the same as those in the method 900 are performed based on a sequence of those steps in the method 900. Steps that are the same as those in the method 1200 are performed based on a sequence of those steps in the method 1200. Steps that are the same as those in the method 900 and steps that are the same as those in the method 1200 are not performed based on a specified sequence. This is not limited in this application.

Optionally, when the first cycle in S1330 is the initial service cycle, both the first information and the initial service cycle are configured in the QoS configuration profile.

Optionally, in addition to the steps in the method 900 and the method 1200, the method 1300 may further include a step in the method 1100.

In other words, when the first cycle is the first traffic shaping service cycle, or in step S1350, when the access network device may further configure the DRX cycle based on the second traffic shaping service cycle, the step in the method 1100 may be added. A sequence of the specific steps is determined based on internal logic. This is not limited in this application.

Specific implementations of all steps involved in the method 1300 are described in detail in the method 900, the method 1100, and the method 1200. Details are not described herein.

According to the solution of the method 1300, when the terminal has received the N data packets belonging to the data unit before the on duration period of the DRX cycle ends, the terminal may enter the sleep state by receiving the sleep indication information sent by the access network device. Therefore, energy consumption may be further reduced.

It should be noted that execution bodies shown in FIG. 9, FIG. 11, FIG. 12, and FIG. 13 are merely examples. The execution body may be a chip, a chip system, or a processor that supports the execution body to implement the method 900, the method 1100, the method 1200, and the method 1300. This is not limited in this application.

The foregoing describes the method embodiments in the embodiments of this application with reference to the accompanying drawings, and the following describes apparatus embodiments in the embodiments of this application. It may be understood that the description of the method embodiments and the description of the apparatus embodiments may correspond to each other. Therefore, for a part that is not described, refer to the foregoing method embodiments.

It may be understood that, in the foregoing method embodiments, the methods and the operations implemented by the access network device may alternatively be implemented by a component (for example, a chip or a circuit) that may be used in the access network device. The methods and the operations implemented by the core network element or the terminal may alternatively be implemented by a component (for example, a chip or a circuit) that may be used in the core network element or the terminal.

The foregoing describes the method embodiments provided in this application, and the following describes apparatus embodiments provided in this application. It may be understood that the description of the apparatus embodiments corresponds to the description of the method embodiments. Therefore, for content that is not described in detail, refer to the foregoing method embodiment. For brevity, details are not described herein again.

The foregoing mainly describes the solutions provided in embodiments of this application from a perspective of interaction between network elements. It may be understood that, to implement the foregoing functions, each network element such as a transmitting end device or a receiving end device, includes a corresponding hardware structure and/or a software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division of functional modules may be performed on the transmitting end device or the receiving end device based on the foregoing method examples. For example, each functional module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

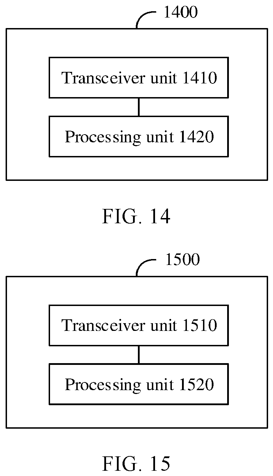

FIG. 14 is a schematic block diagram of a communication apparatus according to an embodiment of this application. The communication apparatus 1400 includes a transceiver unit 1410 and a processing unit 1420. The transceiver unit 1410 may communicate with the outside, and the processing unit 1420 is configured to process data. The transceiver unit 1410 may also be referred to as a communication interface or a communication unit.

Optionally, the communication apparatus 1400 may further include a storage unit. The storage unit may be configured to store instructions and/or data. The processing unit 1420 may read the instructions and/or the data in the storage unit.

In a case, the communication apparatus 1400 may be an access network device, the transceiver unit 1410 is configured to perform the receiving or sending operation of the access network device in the foregoing method embodiments, and the processing unit 1420 is configured to perform an internal processing operation of the access network device in the foregoing method embodiments.

In a design, the transceiver unit 1410 is configured to receive a first cycle from a core network element and a second cycle from a terminal, where the first cycle is an initial service cycle or a first traffic shaping service cycle, and the second cycle is a service cycle expected by the terminal. The processing unit 1420 is configured to configure a DRX cycle for the terminal based on the first cycle and the second cycle.

Optionally, the processing unit 1420 is further configured to perform traffic shaping on a received data unit based on the first cycle and the second cycle.

Specifically, a second traffic shaping service cycle obtained after traffic shaping is performed is obtained, where the second traffic shaping service cycle corresponds to the DRX cycle.

Optionally, the processing unit 1420 is further configured to obtain first information, where the first information indicates a transmission integrity requirement of the data unit, the data unit includes N data packets, each of the N data packets includes a same first identifier, the first identifier is used to identify the data unit, and N is a positive integer. The processing unit 1420 is further configured to control, based on the first information and the first identifier, the transceiver unit 1410 to send sleep indication information to the terminal.

Optionally, each of the N data packets further includes a second identifier, where the second identifier is used to identify the data packet. The processing unit 1420 is further configured to control, based on the first information, the first identifier, and the second identifier, the transceiver unit 1410 to send the sleep indication information to the terminal.

In another design, the processing unit 1420 is configured to obtain first information, where the first information indicates a transmission integrity requirement of the data unit, the data unit includes N data packets, each of the N data packets includes a same first identifier, the first identifier is used to identify the data unit, and N is a positive integer. The processing unit 1420 is further configured to control, based on the first information and the first identifier, the transceiver unit 1410 to send sleep indication information to the terminal.

Optionally, each of the N data packets further includes a second identifier, where the second identifier is used to identify the data packet. The processing unit 1420 is further configured to control, based on the first information, the first identifier, and the second identifier, the transceiver unit 1410 to send the sleep indication information to the terminal.

Optionally, the transceiver unit 1410 is further configured to receive a first cycle from a core network element and a second cycle from a terminal, where the first cycle is an initial service cycle or a first traffic shaping service cycle, and the second cycle is a service cycle expected by the terminal. The processing unit 1420 is further configured to configure a DRX cycle for the terminal based on the first cycle and the second cycle.

Optionally, the processing unit 1420 is further configured to perform traffic shaping on a received data unit based on the first cycle and the second cycle.

Specifically, a second traffic shaping service cycle obtained after traffic shaping is performed is obtained, where the second traffic shaping service cycle corresponds to the DRX cycle.

Optionally, the transceiver unit 1410 is specifically configured to receive a QoS configuration profile, where the QoS configuration profile includes the first information.

Optionally, the transceiver unit 1410 is further specifically configured to receive a QoS configuration profile, where the QoS configuration profile includes the initial service cycle.

In another case, the communication apparatus 1400 may be a component configured in the access network device, for example, a chip in the access network device.

In this case, the transceiver unit 1410 may be an interface circuit, a pin, or the like. Specifically, the interface circuit may include an input circuit and an output circuit, and the processing unit 1420 may include a processing circuit.

Optionally, the transceiver unit 1410 may be a radio frequency module. The processing unit 1420 may be a baseband module. The radio frequency module is mainly configured to receive and send a radio frequency signal and perform conversion between the radio frequency signal and a baseband signal. The baseband module is mainly configured to perform baseband processing, control a base station, and the like.

FIG. 15 is a schematic block diagram of a communication apparatus according to an embodiment of this application. The communication apparatus 1500 includes a transceiver unit 1510 and a processing unit 1520. The transceiver unit 1510 may communicate with the outside, and the processing unit 1520 is configured to process data. The transceiver unit 1510 may also be referred to as a communication interface or a communication unit.

Optionally, the communication apparatus 1500 may further include a storage unit. The storage unit may be configured to store instructions and/or data. The processing unit 1520 may read the instructions and/or the data in the storage unit.

In a case, the communication apparatus 1500 may be a user plane network element. The transceiver unit 1510 is configured to perform the receiving or sending operation of the user plane network element in the foregoing method embodiments, and the processing unit 1520 is configured to perform an internal processing operation of the user plane network element in the foregoing method embodiments. The transceiver unit 1510 is configured to receive an initial service cycle from a core network element and/or a service cycle expected by a terminal. The processing unit 1520 is configured to perform traffic shaping on a received data unit based on the initial service cycle and/or the service cycle expected by the terminal, to obtain a first traffic shaping service cycle obtained after traffic shaping is performed, where the first traffic shaping service cycle is used to configure a DRX cycle for the terminal.

Optionally, the transceiver unit 1510 is further configured to receive a PDR, where the PDR includes the initial service cycle.

Optionally, the PDR further includes first information, where the first information indicates a transmission integrity requirement of the data unit. The processing unit 1520 is further configured to detect, based on the PDR, first identifiers of N data packets belonging to the data unit, and encapsulate the initial service cycle and/or the first identifiers into GTP header information, where the first identifier is used to identify the data unit, and N is a positive integer.

It may be understood that the communication apparatus 1500 may be a component configured in the user plane network element, for example, a chip in the user plane network element.

In this case, the transceiver unit 1510 may be an interface circuit, a pin, or the like. Specifically, the interface circuit may include an input circuit and an output circuit, and the processing unit 1520 may include a processing circuit.

Optionally, the transceiver unit 1510 may be a radio frequency module. The processing unit 1520 may be a baseband module. The radio frequency module is mainly configured to: receive and send a radio frequency signal, and perform conversion between the radio frequency signal and a baseband signal. The baseband module is mainly configured to: perform baseband processing, control a base station, and the like.

In another case, the communication apparatus 1500 may be a session management network element. The transceiver unit 1510 is configured to perform the receiving or sending operation of the session management network element in the foregoing method embodiments, and the processing unit 1520 is configured to perform an internal processing operation of the session management network element in the foregoing method embodiments. The processing unit 1520 is configured to obtain an initial service cycle and/or first information. The initial service cycle is a cycle in which a core network element (for example, an application network element) generates a data unit in a service transmission process. A QoS configuration file is sent to an access network device, where the QoS configuration file includes the initial service cycle and/or the first information.

Optionally, the first information includes type information of a transmission service or 1-bit indication information.

Optionally, the transceiver unit 1510 is configured to send a PDR to a user plane network element, where the PDR includes the initial service cycle and/or the first information. The PDR is used to detect first identifiers of N data packets belonging to the data unit, where the first identifier is used to identify the data unit, and N is a positive integer.

It may be understood that the communication apparatus 1500 may be a component configured in the session management network element, for example, a chip in the session management network element.

In this case, the transceiver unit 1510 may be an interface circuit, a pin, or the like. Specifically, the interface circuit may include an input circuit and an output circuit, and the processing unit 1520 may include a processing circuit.

Optionally, the transceiver unit 1510 may be a radio frequency module. The processing unit 1520 may be a baseband module. The radio frequency module is mainly configured to: receive and send a radio frequency signal, and perform conversion between the radio frequency signal and a baseband signal. The baseband module is mainly configured to: perform baseband processing, control a base station, and the like.

In another case, the communication apparatus 1500 may be an application network element, and the transceiver unit 1510 is configured to perform the receiving or sending operation of the application network element in the foregoing method embodiments. The transceiver unit 1510 is configured to send an initial service cycle and/or first information, where the initial service cycle is used to configure a DRX cycle for a terminal, and the first information indicates a transmission integrity requirement of a data unit.

It may be understood that, the communication apparatus 1500 may be a component configured in the application network element, for example, a chip in the application network element.

In this case, the transceiver unit 1510 may be an interface circuit, a pin, or the like. Specifically, the interface circuit may include an input circuit and an output circuit.

Optionally, the communication apparatus 1500 may further include a processing unit 1520, and the processing unit 1520 may include a processing circuit.

In another case, the communication apparatus 1500 may be a server. The transceiver unit 1510 is configured to perform the receiving or sending operation of the server in the foregoing method embodiments, and the processing unit 1520 is configured to perform an internal processing operation of the server in the foregoing method embodiments. The transceiver unit 1510 is configured to send a data packet, where the data packet includes a first identifier, the first identifier is used to identify a data unit, the data unit includes N data packets, and N is a positive integer. The processing unit 1520 is configured to identify the data packet.

It may be understood that the communication apparatus 1500 may be a component configured in the server, for example, a chip in the server.

In this case, the transceiver unit 1510 may be an interface circuit, a pin, or the like. Specifically, the interface circuit may include an input circuit and an output circuit, and the processing unit 1520 may include a processing circuit.

In another case, the communication apparatus 1500 may be a terminal. The transceiver unit 1510 is configured to perform the receiving or sending operation of the terminal in the foregoing method embodiments, and the processing unit 1520 is configured to perform an internal processing operation of the terminal in the foregoing method embodiments. The transceiver unit 1510 is configured to send an expected service cycle to an access network device, and receive a DRX cycle from an access network device.

Optionally, the DRX cycle corresponds to the expected service cycle.

Optionally, the transceiver unit 1510 is further configured to receive sleep indication information from the access network device. The processing unit 1520 is configured to enter a sleep state based on the sleep indication information.

It may be understood that the communication apparatus 1500 may be a component configured in the terminal, for example, a chip in the terminal.

In this case, the transceiver unit 1510 may be an interface circuit, a pin, or the like. Specifically, the interface circuit may include an input circuit and an output circuit, and the processing unit 1520 may include a processing circuit.

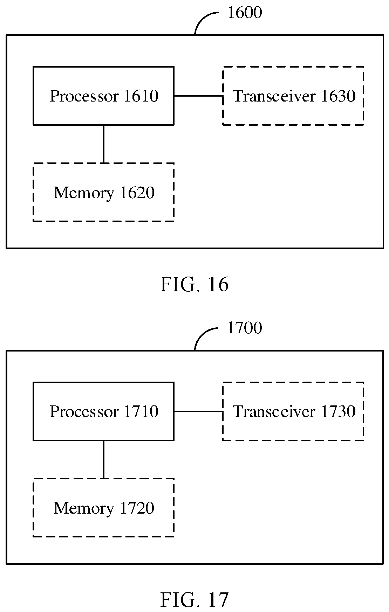

As shown in FIG. 16, an embodiment of this application further provides a communication apparatus 1600. The communication apparatus 1600 includes a processor 1610. The processor 1610 is coupled to a memory 1620. The memory 1620 is configured to store a computer program or instructions and/or data. The processor 1610 is configured to execute the computer program or the instructions and/or the data stored in the memory 1620, so that the methods in the foregoing method embodiments are executed.

Optionally, the communication apparatus 1600 includes one or more processors 1610.

Optionally, as shown in FIG. 16, the communication apparatus 1600 may further include a memory 1620.

Optionally, the communication apparatus 1600 may include one or more memories 1620.

Optionally, the memory 1620 and the processor 1610 may be integrated together, or separately disposed.

Optionally, as shown in FIG. 16, the communication apparatus 1600 may further include a transceiver 1630. The transceiver 1630 is configured to receive and/or send a signal. For example, the processor 1610 is configured to control the transceiver 1630 to receive and/or send a signal.

In a solution, the communication apparatus 1600 is configured to implement the operation performed by the access network device in the foregoing method embodiments.

For example, the processor 1610 is configured to implement the operation performed in the access network device in the foregoing method embodiments, and the transceiver 1630 is configured to implement the receiving or sending operation performed by the access network device in the foregoing method embodiments. The processing unit 1420 in the apparatus 1400 may be the processor in FIG. 16, and the transceiver unit 1410 may be the transceiver in FIG. 16. For details about the operation performed by the processor 1610, refer to the foregoing description of the processing unit 1420. For an operation performed by the transceiver 1630, refer to the description of the transceiver unit 1410. Details are not described herein again.

As shown in FIG. 17, an embodiment of this application further provides a communication apparatus 1700. The communication apparatus 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, so that the methods in the foregoing method embodiment are executed.

Optionally, the communication apparatus 1700 includes one or more processors 1710.

Optionally, as shown in FIG. 17, the communication apparatus 1700 may further include the memory 1720.

Optionally, the communication apparatus 1700 may include one or more memories 1720.

Optionally, the memory 1720 and the processor 1710 may be integrated together, or separately disposed.

Optionally, as shown in FIG. 17, the communication apparatus 1700 may further include a transceiver 1730. The transceiver 1730 is configured to receive and/or send a signal. For example, the processor 1710 is configured to control the transceiver 1730 to receive and/or send a signal.

In a solution, the communication apparatus 1700 is configured to implement the operation performed by the core network element or the terminal in the foregoing method embodiments. For example, the processor 1710 is configured to implement the operation performed in the core network element or the terminal in the foregoing method embodiments, and the transceiver 1730 is configured to implement the receiving or sending operation performed by the core network element or the terminal in the foregoing method embodiments. The processing unit 1520 in the apparatus 1500 may be the processor in FIG. 17, and the transceiver unit 1510 may be the transceiver in FIG. 17. For details about the operation performed by the processor 1710, refer to the foregoing description of the processing unit 1520. For details about the operation performed by the transceiver 1730, refer to the description of the transceiver unit 1510. Details are not described herein again.

An embodiment of this application further provides a computer-readable storage medium. The computer-readable storage medium stores computer instructions for implementing the method performed by the access network device in the foregoing method embodiment or the method performed by the core network element or the terminal in the foregoing method embodiment.

For example, when a computer program is executed by a computer, the computer may implement the method performed by the access network device in the foregoing method embodiment or the method performed by the core network element or the terminal in the foregoing method embodiment.

An embodiment of this application further provides a computer program product including instructions. When the instructions are executed by a computer, the computer implements the method performed by the access network device in the foregoing method embodiment or the method performed by the core network element or the terminal in the foregoing method embodiment.

An embodiment of this application further provides a communication system. The communication system includes the access network device and the core network element or the terminal in the foregoing embodiments.

For explanations and beneficial effects of related content of any of the communication apparatuses provided above, refer to the corresponding method embodiment provided above. Details are not described herein again.

In embodiments of this application, the access network device, the core network element, or the terminal may include a hardware layer, an operating system layer running over the hardware layer, and an application layer running over the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by an access network device, a core network element, or a terminal, or by a function module that can invoke and execute a program and that is in the access network device, the core network element, or the terminal.

Aspects or features of this application may be implemented as a method, an apparatus, or a product that uses standard programming and/or engineering technologies. The term "product" used in this specification may cover a computer program that can be accessed from any computer-readable component, carrier, or medium. For example, the computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel and various other media that can store, include, and/or carry instructions and/or data.

It may be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

A person skilled in the art may clearly understand that, for the purpose of convenient and brief description, for a detailed working process of the foregoing apparatus and unit, refer to a corresponding process in the method embodiments. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one unit, each of the units may exist alone physically, or two or more units are integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium (for example, a solid state drive (solid state drive, SSD)), or the like. For example, the usable medium may include but is not limited to any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A configuration method, comprising:
receiving a first cycle from a core network element and a second cycle from a terminal, wherein the first cycle is an initial service cycle or a first traffic shaping service cycle, and the second cycle is a service cycle expected by the terminal; and
configuring a discontinuous reception DRX cycle for the terminal based on the first cycle and the second cycle.

2. The method according to claim 1, wherein the method further comprises:
performing traffic shaping on a received data unit based on the first cycle and the second cycle.

3. The method according to claim 2, wherein the method further comprises:
obtaining a second traffic shaping service cycle obtained after traffic shaping is performed, wherein the second traffic shaping service cycle corresponds to the DRX cycle.

4. The method according to any one of claims 1 to 3, wherein the method further comprises:
obtaining first information, wherein the first information indicates a transmission integrity requirement of the data unit, the data unit comprises N data packets, each of the N data packets comprises a same first identifier, the first identifier is used to identify the data unit, and N is a positive integer; and
sending sleep indication information to the terminal based on the first information and the first identifier.

5. The method according to claim 4, wherein each of the N data packets further comprises a second identifier, and the second identifier is used to identify the data packet; and
the sending sleep indication information to the terminal based on the first information and the first identifier comprises:
sending the sleep indication information to the terminal based on the first information, the first identifier, and the second identifier.

6. The method according to any one of claims 1 to 5, wherein the receiving an initial service cycle from a core network element comprises:
receiving a quality of service QoS configuration profile, wherein the QoS configuration profile comprises the initial service cycle.

7. The method according to claim 4 or 5, wherein the obtaining first information comprises:
receiving a QoS configuration profile, wherein the QoS configuration profile comprises the first information.

8. A communication method, comprising:
obtaining first information, wherein the first information indicates a transmission integrity requirement of a data unit, the data unit comprises N data packets, each of the N data packets comprises a same first identifier, the first identifier is used to identify the data unit, and N is a positive integer; and
sending sleep indication information to a terminal based on the first information and the first identifier.

9. The method according to claim 8, wherein each of the N data packets further comprises a second identifier, and the second identifier is used to identify the data packet; and
the sending sleep indication information to a terminal based on the first information and the first identifier comprises:
sending the sleep indication information to the terminal based on the first information, the first identifier, and the second identifier.

10. The method according to claim 8 or 9, wherein the method further comprises:
receiving a first cycle from a core network element and a second cycle from the terminal, wherein the first cycle is an initial service cycle or a first traffic shaping service cycle, and the second cycle is a service cycle expected by the terminal; and
configuring a DRX cycle for the terminal based on the first cycle and the second cycle.

11. The method according to claim 10, wherein the method further comprises:
performing traffic shaping on the received data unit based on the first cycle and the second cycle.

12. The method according to claim 11, wherein the method further comprises:
obtaining a second traffic shaping service cycle obtained after traffic shaping is performed, wherein the second traffic shaping service cycle corresponds to the DRX cycle.

13. The method according to any one of claims 8 to 12, wherein the obtaining first information comprises:
receiving a quality of service QoS configuration profile, wherein the QoS configuration profile comprises the first information.

14. The method according to any one of claims 10 to 12, wherein the receiving an initial service cycle from a core network element comprises:
receiving a QoS configuration profile, wherein the QoS configuration profile comprises the initial service cycle.

15. A communication apparatus, comprising a processing unit and a transceiver unit, wherein
the transceiver unit is configured to receive a first cycle from a core network element and a second cycle from a terminal, the first cycle is an initial service cycle or a first traffic shaping service cycle, and the second cycle is a service cycle expected by the terminal; and
the processing unit is configured to configure a discontinuous reception DRX cycle for the terminal based on the first cycle and the second cycle.

16. The apparatus according to claim 15, wherein the processing unit is further configured to perform traffic shaping on a received data unit based on the first cycle and the second cycle.

17. The apparatus according to claim 16, wherein the processing unit is further configured to obtain a second traffic shaping service cycle obtained after traffic shaping is performed, and the second traffic shaping service cycle corresponds to the DRX cycle.

18. The apparatus according to any one of claims 15 to 17, wherein the processing unit is further configured to obtain first information, the first information indicates a transmission integrity requirement of the data unit, the data unit comprises N data packets, each of the N data packets comprises a same first identifier, the first identifier is used to identify the data unit, and N is a positive integer; and
the processing unit is further configured to control, based on the first information and the first identifier, the transceiver unit to send sleep indication information to the terminal.

19. The apparatus according to claim 18, wherein each of the N data packets further comprises a second identifier, and the second identifier is used to identify the data packet; and
the processing unit is specifically configured to control, based on the first information, the first identifier, and the second identifier, the transceiver unit to send the sleep indication information to the terminal.

20. The apparatus according to any one of claims 15 to 19, wherein the transceiver unit is specifically configured to receive a quality of service QoS configuration profile, and the QoS configuration profile comprises the initial service cycle.

21. The apparatus according to claim 18 or 19, wherein the transceiver unit is specifically configured to:
receive a QoS configuration profile, wherein the QoS configuration profile comprises the first information.

22. A communication apparatus, comprising a processing unit and a transceiver unit, wherein
the processing unit is configured to obtain first information, the first information indicates a transmission integrity requirement of a data unit, the data unit comprises N data packets, each of the N data packets comprises a same first identifier, the first identifier is used to identify the data unit, and N is a positive integer; and
the processing unit is further configured to control, based on the first information and the first identifier, the transceiver unit to send sleep indication information to a terminal.

23. The apparatus according to claim 22, wherein each of the N data packets further comprises a second identifier, and the second identifier is used to identify the data packet; and
the processing unit is specifically configured to control, based on the first information, the first identifier, and the second identifier, the transceiver unit to send the sleep indication information to the terminal.

24. The apparatus according to claim 22 or 23, wherein the transceiver unit is further configured to receive a first cycle from a core network element and a second cycle from the terminal, the first cycle is an initial service cycle for a first traffic shaping service cycle, and the second cycle is a service cycle expected by the terminal; and
the processing unit is further configured to configure a DRX cycle for the terminal based on the first cycle and the second cycle.

25. The apparatus according to claim 24, wherein the processing unit is further configured to perform traffic shaping on the received data unit based on the first cycle and the second cycle.

26. The apparatus according to claim 25, wherein the processing unit is further configured to obtain a second traffic shaping service cycle obtained after traffic shaping is performed, and the second traffic shaping service cycle corresponds to the DRX cycle.

27. The apparatus according to any one of claims 22 to 26, wherein the transceiver unit is specifically configured to receive a quality of service QoS configuration profile, and the QoS configuration profile comprises the first information.

28. The apparatus according to any one of claims 24 to 26, wherein the transceiver unit is specifically configured to receive a QoS configuration profile, and the QoS configuration profile comprises the initial service cycle.

29. A communication apparatus, comprising a processor, wherein the processor is coupled to a memory, the memory is configured to store a computer program or instructions, and the processor is configured to execute the computer program or the instructions in the memory, so that a communication device performs the method according to any one of claims 1 to 7, or the method according to any one of claims 8 to 14.

30. A chip system, comprising: a processor, configured to invoke a computer program from a memory and run the computer program, so that a communication device on which the chip system is installed performs the method according to any one of claims 1 to 7, or the method according to any one of claims 8 to 14.

31. A computer-readable storage medium, storing a computer program or instructions, wherein when the computer program or the instructions are executed, a computer is enabled to perform the method according to any one of claims 1 to 7, or the method according to any one of claims 8 to 14.

32. A computer program product, wherein the computer program product comprises a computer program, and when the computer program is run on the computer, the computer is enabled to perform the method according to any one of claims 1 to 7, or the method according to any one of claims 8 to 14.
